## Europäisches Patentamt

## European Patent Office

## Office européen des brevets

(19)

(11) Veröffentlichungsnummer: **0 157 194**
**B1**

(12) # EUROPÄISCHE PATENTSCHRIFT

(45) Veröffentlichungstag der Patentschrift:
**10.08.88**

(21) Anmeldenummer: **85102435.6**

(22) Anmeldetag: **05.03.85**

(51) Int. Cl.⁴: **F 16 J 15/12,** F 16 J 15/10,
C 08 J 3/24

(54) **Imprägnierte Flachdichtung, insbesondere Zylinderkopfdichtung für Verbrennungskraftmaschinen, und ihr Herstellungsverfahren.**

(30) Priorität: **09.03.84 DE 3408596**

(43) Veröffentlichungstag der Anmeldung:
**09.10.85 Patentblatt 85/41**

(45) Bekanntmachung des Hinweises auf die Patenterteilung:
**10.08.88 Patentblatt 88/32**

(84) Benannte Vertragsstaaten:
**DE FR GB IT SE**

(56) Entgegenhaltungen:
**DE-A-2 304 558**
**DE-C-740 388**

(73) Patentinhaber: **GOETZE AG, Bürgermeister-Schmidt- Strasse 17, D-5093 Burscheid 1 (DE)**

(72) Erfinder: **Majewski, Klaus- Peter, Dipl.- Ing., Am Sportfeld 26, D-5093 Burscheid (DE)**
Erfinder: **Lönne, Klaus, Dipl.- Ing., Bürgermeister-Schmidt- Strasse 50, D-5093 Burscheid (DE)**
Erfinder: **Zerfass, Hans- Rainer, Dr., Finkenweg 8, D-5093 Burscheid (DE)**

EP 0 157 194 B1

### Beschreibung

Die Erfindung betrifft eine Weichstofflachdichtung, wie insbesondere eine Zylinderkopfdichtung für Verbrennungskraftmaschinen, bestehend aus einem imprägnierten und gegebenenfalls metallisch verstärkten Faservlies mit einem ein- oder beidseitigen, ganz- oder teilflächigen Überzug auf den Dichtflächen aus einem polymeren Material mit gegebenenfalls darin enthaltenen gelösten, suspendierten und/oder dispergierten flüssigen oder festen Zusatzstoffen) und das Herstellungsverfahren der Dichtung.

Weichstoffzylinderkopfdichtungen bestehen bevorzugt aus gegebenenfalls metallisch verstärkten Faservliesplatten. Vielfach sind derartige Dichtungen vor allem zur Verbesserung der Festigkeits-, Dichtigkeits- und Beständigkeitswerte nach beispielsweise der DE-A-2 304 505 mit synthetischen vernetzbaren Flüssigkeiten so imprägniert, daß das Imprägniermittel die Poren des Weichstoffes zu meist etwa 60 - 90 % ausfüllt, und das Imprägniermittel ist in der fertigen Dichtungsplatte meist thermisch vernetzt.

Da Zylinderkopfdichtungen durch das vernetzte Imprägniermittel relativ verformungssteif werden, so daß sie sich nicht mehr ausreichend beim Einbau an die Dichtflächen des Motorblockes anpassen, werden derartige Dichtungen ein- oder beidseitig, teil- oder ganzflächig mit vorzugsweise elastischen Überzügen aus Polymeren zur Verbesserung der Mikro- und Makroabdichtung versehen. Ebenso können lediglich imprägnierte Zylinderkopfdichtungen leichter nach dem motorischen Betrieb an den Dichtflächen von Motorblock oder Zylinderkopf ankleben oder das vernetzte Imprägniermittel in der Dichtung kann durch längeres Lagern und Licht-, Luft- oder Ozoneinfluß altern und dadurch verspröden und auch gegebenenfalls erweichen. Die Überzugsmassen enthalten dann gelöst, suspendiert und/oder dispergiert Substanzen, die der Klebneigung entgegenwirken, oder Alterungsschutz- Lichtschutz- und/oder Ozonschutzmittel. Ebenso können Überzüge auf Zylinderkopfdichtungen je nach Anwendungsfall die Gleiteigenschaften der Dichtungen herauf- oder herabsetzende, meist feinkörnige bis pulverige Substanzen enthalten.

Um die meist festen, pulverigen bis feinkörnigen Zusatzstoffe ausreichend im Überzugsmaterial zu lösen und/oder zu binden, sind vielfach im Verhältnis größere Mengen an polymerem Material erforderlich. Damit die Überzüge die durch die Zusatzstoffe gewünschte Verbesserung überhaupt erbringen, müssen dann auf die Dichtflächen relativ dicke Überzüge aufgetragen werden. Dicke Überzüge erfordern aber größere Mengen an meist teurem polymerem Material, sie sind nach dem Auftrag schwer zu trocknen beziehungsweise auszuhärten, sie erfordern verteuernde zusätzliche Verfahrensschritte und Auftragsgeräte, sie sind leichter zu zerstören im motorischen Betrieb, und sie beeinträchtigen gegebenenfalls das Funktionsverhalten der Dichtung ungünstig.

Zusätzlich ist eine gute Haftung der Überzüge auf den Dichtflächen erforderlich. Imprägnierte Dichtungen aber mit hohem Porenfüllungsgrad an vernetztem Imprägniermittel sind an den Oberflächen relativ glatt und hart, so daß das Verankern der Überzüge am Weichstoff schwierig ist. Ein Aufrauhen das Weichstoffes zur Haftverbesserung scheidet aus, und die Verwendung von Klebstoffen würde die Herstellung der Dichtung wesentlich verteuern.

Es ist daher Aufgabe der vorliegenden Erfindung, imprägnierte Flachdichtungen nach dem Oberbegriff des Hauptanspruches zu schaffen, bei denen die beschriebenen Nachteile behoben sind. Das Herstellungsverfharen der Dichtungen soll zugleich einfach und kostensparend sein.

Erfindungsgemäß wird diese Aufgabe durch eine Flachdichtung gelöst, bei der das Überzugsmaterial auf die Oberfläche der imprägnierten Flachdichtung vor dem Vernetzen des Imprägniermittels aufgetragen und bei der das Überzugsmaterial zusammen mit dem Imprägniermittel in einem gemeinsamen Verfahrensschritt vernetzt ist. Vorzugsweise enthält das Überzugsmaterial als polymere Komponente ausschließlich das Imprägniermittel der Dichtung, im Prinzip ist es jedoch auch möglich, daß als polymere Komponente ein anderes vernetzungsfähiges polymeres Material in 50 - 100 Gewichtsprozent im Verschnitt mit dem Imprägniermittel als Rest eingesetzt wird.

Die im polymeren Überzugsmaterial vorhandenen gelösten, suspendierten und/oder dispergierten Zusatzstoffe sind bevorzugt die in der Polymerchemie üblichen Zusatzhilfsmittel in Mengen von 0,5 - 10 %, und diese sind bevorzugt Alterungsschutzmittel, Lichtschutzmittel, Ozonschutzmittel, Vernetzungsmittel, wie bevorzugt Peroxide, Vernetzungshilfsmittel, wie metallurgische Verbindungen als Vernetzungskatalysator oder Weichmacher auf der Basis von vor allem temperaturbeständigen Octylphtalaten.

Feste feinkornige Substanzen, die im Überzugsmaterial dispergiert und gebunden sind, sind zu bevorzugt 5 - 50 Gewichtsprozent zugegeben, und sie dienen vor allem zur Erniedrigung der Klebneigung der Dichtung, zur Erniedrigung des Reibungskoeffizienten der Dichtung, der Verstärkung des Überzuges oder gegebenenfalls zur Erhöhung des Reibungskoeffizienten der Dichtung. Zusatzstoffe, die die Klebneigung und den Reibungskoeffizienten der Dichtung herabsetzen, sind bevorzugt feinkörniges bis pulveriges Polytetrafluoräthylen, Talkum, Kaolin, Molybdändisulfid, Bornitrid, Graphit oder Metallpulver. Substanzen, die den Reibungskoeffizienten der Dichtung erhöhen, sind bevorzugt pulveriger bis feinkörniger Sand, Korund, Glimmer oder scharfkantige Glaskügelchen. Zusatzstoffe, die die Festigkeit des Dichtungsüberzuges steigern, können in der Polymerchemie übliche Füllstoffe, wie bevorzugt pulveriges bis feinkorniges Kieselgur, Diatomeenerde oder Bentonit oder gegebenenfalls auch feinfaserige, anorganische oder organische Stoffe sein.

Zur Herstellung wird die Dichtung zunächst nach einem der gewünschten Verfahren imprägniert und unmittelbar anschließend durch bevorzugt Tauchen, Besprühen oder Bewalzen mit dem Überzugsmaterial ein- oder beidseitig versehen. Anschließend erfolgt das Vernetzen von Überzugsmaterial und Imprägniermittel bevorzugt thermisch in einem Ofen. Gefunden wurde dabei, daß die verwendeten festen oder flüssigen Zuzatsstoffe unmittelbar auf die Dichtung direkt nach dem Imprägnieren aufgetragen werden können. Die im Oberflächenbereich der Dichtung vorhandenen Imprägniermittel sind dann dem Überzugsmaterial gleichzusetzen, das im flüssigen und unvernetzten Zustand die Zusatzstoffe umfließt beziehungsweise umhüllt und so nach dem Vernetzen fest bindet. Zur Herstellung von partiellen Überzügen kann das Überzugsmaterial durch eine Schablone und/oder im Siebdruckverfahren aufgetragen werden.

Durch den erfindungsgemäßen Auftrag der Überzugsmaterialien auf die unvernetzten imprägniermittelhaltigen Dichtflächen kann im Grenzflächenbereich das Imprägniermittel sich mit dem Überzugsmaterial mischen, so daß nach dem Vernetzen unter chemischer Verknüpfung der Polymeren des Imprägniermittels und des polymeren Auftragsmaterials ein fester Verbund und damit eine besonders feste Haftung entsteht. Gefunden wurde dabei, daß bei Verwendung des Imprägniermittels auch als Überzugsmaterial ein besonders fester Verbund zwischen Überzug und Dichtung entsteht. Die Zusatzstoffe im Überzugsmaterial können als Vernetzungshilfsmittel die Eigenschaften der Überzüge durch vor allem Einstellung einer definierten Härte, einer definierten Elastizität, einer bestimmten Plastizität oder auch einer bestimmten Beständigkeit gegenüber den Abdichtmedien je nach Anwendungsfall so weit verbessern, daß relativ preiswerte polymere Bestandteile im Übergangsmaterial denen von kostspieligen polymeren Überzugsmaterialien gleichwertig sind und somit kostensparend auf deren Einsatz verzichtet werden kann.

Während die Erfindung sich bevorzugt auf Zylinderkopfdichtungen bezieht, ist es auch möglich, die Erfindung zur Herstellung von anderen Flachdichtungen einzusetzen. Bevorzugte Flachdichtungen im Kraftmaschinenbau sind Auspuffflanschdichtungen, Ölwannendichtungen oder Vergaserflanschdichtungen.

## Patentansprüche

1. Weichstofflachdichtung, wie insbesondere eine Zylinderkopfdichtung für Verbrennungskraftmaschinen, bestehend aus einem imprägnierten und gegebenenfalls metallisch verstärkten Faservlies mit einem ein- oder beidseitigen, ganz- oder teilflächigen Überzug auf den Dichtflächen aus einem polymeren Material mit gegebenenfalls darin enthaltenen gelösten, suspendierten und/oder dispergierten flüssigen oder festen Zusatzstoffen, dadurch gekennzeichnet, daß das Überzugsmaterial auf die imprägnierte Flachdichtung vor dem Vernetzen des Imprägniermittels aufgetragen ist, und daß das Überzugsmaterial zusammen mit dem Imprägniermittel im selben Verfahrensschritt vernetzt ist.

2. Weichstofflachdichtung nach Anspruch 1, dadurch gekennzeichnet, daß das Überzugsmaterial als polymere Komponente ausschließlich das Imprägniermittel der Dichtung enthält.

3. Weichstofflachdichtung nach Anspruch 1, dadurch gekennzeichnet, daß das Überzugsmaterial als polymere Komponente 50 - 100 Gewichtsprozent eines vernetzungsfähigen polymeren Materials im Gemisch mit 0 - 50 Gewichtsprozent des Imprägniermittels enthält.

4. Weichstofflachdichtung nach mindestens einem der Ansprüche 1 bis 3, dadurch gekennzeichnet, daß das Überzugsmittel 0,5-10 Gewichtsprozent mindestens eines der in der Polymerchemie üblichen Hilfsstoffe enthält.

5. Weichstofflachdichtung nach mindestens einem der Ansprüche 1 bis 4, dadurch gekennzeichnet, daß die Hilfsstoffe Alterungsschutzmittel, Ozonschutzmittel, Vernetzungsmittel, Vernetzungskatalysatoren und/oder Weichmacher sind.

6. Weichstofflachdichtung nach mindestens einem der Ansprüche 1 bis 5, dadurch gekennzeichnet, daß das Überzugsmaterial 5 - 50 Gewichtsprozent feste, feinfaserige oder feinkörnige bis pulverige, den Reibungskoeffizienten des Überzuges herabsetzende, die Klebrigkeit der Überzüge herabsetzende, die Festigkeit des Überzuges erhöhende und/oder den Reibungskoeffizienten des Überzuges erhöhende Substanzen enthält.

7. Verfahren zur Herstellung der Weichstofflachdichtung nach mindestens einem der Ansprüche 1 bis 6, dadurch gekennzeichnet, daß das Überzugsmaterial auf die Dichtung nach dem Imprägnieren aufgetragen wird, und daß das Überzugsmaterial und das Imprägniermittel in einem gemeinsamen Verfahrensschritt vernetzt werden.

8. Verfahren zur Herstellung einer Weichstoffdichtung nach mindestens einem der Ansprüche 1 bis 6 mit einem partiellen Überzug durch Verwendung von Schablonendruck und/oder des Siebdruckverfahrens.

**Claims**

1. Soft material flat gasket, such as especially a cylinder head gasket for internal combustion engines, consisting of an impregnated and optionally metal reinforced fibrous mat, with a complete or partial coating on one or both sides on the sealing surfaces of a polymer material with optionally therein dissolved, suspended and/or dispersed fluid or solid additives, characterized in that the coating material is applied to the surface of the impregnated flat gasket before the polymerising of the impregnating material and in which the coating material together with the impregnating material are polymerised in a common method step.

2. Soft material flat gasket according to claim 1, characterized in that the coating material contains as polymer components exclusively the impregnating medium of the gasket.

3. Soft material flat gasket according to claim 1, characterized in that the coating material contains as polymer components 30 - 100 weight percent of a polymerisable polymer material in mixture with 0 - 50 weight percent of the inpregnating medium.

4. Soft material flat gasket according to at least one of claims 1 to 3, characterized in that the coating material contains 0,5 - 10 weight percent of at least one of the helping agents customary in polymer chemistry.

5. Soft material flat gasket according to at least one of claims 1 to 4, characterized in that the helping agents are means protecting against aging or ozone, polymerising means and/or softeners.

6. Soft material flat gasket according to at least one of claims 1 to 5, characterized in that the coating material contains 5 - 50 weight percent of solid, fine fibrous or fine granular to powder substance reducing the coefficient of friction of the coating, reducing the adhesiveness of the coating, enhancing the strength of the coating and/or enhancing the coefficient of friction of the coating.

7. Method of manufacture of the soft material flat gasket according to at least one of claims 1 to 6, characterized in that the coating material is applied to the gasket after the impregnation and in that the impregnating material and the coating material are polymerised in a common method step.

8. Method of manufacture of the soft material flat gasket according to at least one of claims 1 to 6 with a partial coating, through use of stencil pressure and/or the screen printing method.

**Revendications**

1. Joint d'étanchéité en matériau tendre, tel qu'en particulier un joint d'étanchéité de culasse pour machine à combustion interne, se composant d'un tissu de fibres imprégné et, le cas échéant, renforcé métalliquement, avec un revêtement sur les surfaces d'étanchéité, ce revêtement étant disposé sur l'un ou les deux cotés, étant partiel ou total et étant composé d'un matériau polymère comportant, le cas échéant, des matériaux additonnels solides ou liquides, en solution, en suspension et/ou dispersion, caractériseé en ce que le matériau de revêtement est appliqué sur les surfaces du joint d'étanchéité imprégné avant la réticulation de l'agent d'imprégnation, le matériau de revêtement étant réticulé en meme temps que l'agent d'imprégnation en une étape de procédé commune.

2. Joint d'étanchéité en matériau tendre selon la revendication 1, caractérisé en ce que le matériau de revêtement ne comprend, en guise de composant polymère, que l'agent d'imprégnation du joint d'étanchéité.

3. Joint d'étanchéité en matériau tendre selon la revendication 1, caractérisé en ce que le matériau de revêtement contient en tant que composnat polymère 50 à 100 % en poids d'un matériau polymère réticulable mélangé avec 0 à 50 % en poids du moyen d'imprégnation.

4. Joint d'étanchéité en matériau tendre selon une au moins des revendications 1 à 3, caractérisé en ce que le matériau de revêtement contient 0,5 à 10 % en poids d'au moins un des agents auxiliaires usuels dans la chimie des polymères.

5. Joint d'étanchéité en matériau tendre selon une au moins des revendications 1 à 4, caractérisé en ce que les matériaux auxiliaires sont des metériaux de protection contre l'altération, contre l'ozone, des matériaux favorisant la réticulation, des matériaux catalyseurs de réticulation et/ou favorisant l'amolissement.

6. Joint d'étanchéité en matériau tendre selon une au moins des revendications 1 à 5, caractérisé en ce que le matériau de revêtement contient 5 à 50 % en poids de substances à fibres fines, sous forme de granulés plus ou moins fins ou de poudre, diminuant le coéfficient de frottement du revêtement, diminuant la tendance au collage du revêtement, augmentant la résistance du revêtement et/ou le coéfficient de frottement du revêtement.

7. Procédé de fabrication d'un joint d'étanchéité en matériau tendre selon au moins une des revendications 1 à 6, caractérisé en ce que le matériau de revêtement est appliqué sur le joint d'étanchéité aprés l'imprégnation et en ce que le matériau de revêtement et le matériau d'imprégnation sont réticulés au cours d'une meme étape de procédé.

8. Procédé de fabrication d'un joint plat en matériau tendre selon une au moins des revendications 1 à 6, avec un revêtement partiel appliqué par un procédé d'application au pochoir et/ou de sérigraphie.